# EUROPÄISCHE PATENTSCHRIFT

(11) **EP 0 993 762 B1**
(45) Veröffentlichungstag und Bekanntmachung des Hinweises auf die Patenterteilung: **15.01.2003**
(21) Anmeldenummer: 99115870.0
(22) Anmeldetag: 12.08.1999
(51) Int. Cl.: A01B 49/06, A01C 15/00, A01B 71/06

(54) **Gezogene landwirtschaftliche Verteilmaschine**
Trailed agricultural dispenser
Epandeur agricole tiré

(30) Priorität: 17.09.1998 DE 19842575
(43) Veröffentlichungstag der Anmeldung: 19.04.2000
(73) Patentinhaber: Amazonen-Werke H. Dreyer GmbH & Co. KG, 49205 Hasbergen (DE)
(72) Erfinder: Gattermann, Bernd, Dipl.-Ing., 27798 Hude (DE); Tiessen, Reimer Uwe, 26135 Oldenburg (DE); Reinke, Wilfried, 26123 Oldenburg (DE)

(56) Entgegenhaltungen:
- EP-A- 0 540 912
- EP-A- 0 654 205
- DE-A- 19 531 172
- DE-U- 9 214 242
- US-A- 4 805 927

## Beschreibung

Die Erfindung betrifft ein gezogene landwirtschaftliche Verteilmaschine gemäß des Oberbegriffes des Patentanspruches 1.

Derartige Verteilmaschinen sind beispielsweise aus der DE-19531172-A bekannt. In der Regel ist bei diesen Verteilmaschinen der Vorratsbehälter im hinteren Bereich des Tragrahmens angeordnet. Soll nun jedoch der Vorratsbehälter im vorderen Bereich des Tragrahmens angeordnet werden, so ist das Kuppelelement sehr nahe des Vorratsbehälters angeordnet, so daß ein enges Wenden nicht möglich ist.

Der Erfindung liegt die Aufgabe zugrunde, bei gezogenen Verteilmaschinen, bei denen der Vorratsbehälter im vorderen Bereich des Tragrahmens angeordnet ist, Voraussetzungen zu schaffen, daß auf einfache Weise enge Wenderadien mit der gezogenen Verteilmaschine möglich sind.

Diese Aufgabe wird erfindungsgemäß durch die kennzeichnenden Merkmale des Anspruches 1 gelöst. Infolge dieser Maßnahmen läßt sich ein sehr enger Wenderadius mit der gezogenen Verteilmaschine verwirklichen, weil aufgrund des Abstandes zwischen der Schwenkachse des Gelenkes und den Kuppelelementen zum Ankuppeln an den Ackerschlepper, der Ackerschlepper sich im Winkel von etwa 90° zur Längsachse der Verteilmaschine beim Wenden stellen kann.

Bei Verteilmaschinen, die motorisch angetriebene Bearbeitungswerkzeuge oder Geräteteile aufweisen, die motorisch angetrieben werden müssen, wobei der Antrieb über eine Gelenkwelle von der Schlepperzapfwelle abgenommen wird, ist vorgesehen, daß unterhalb der Zugdeichsel und des Tragrahmens ein Schwenkgetriebe angeordnet ist, und daß die Achse der aufrechten Wellen des Schwenkgetriebes mit der Schwenkachse des Gelenkes, mit dem die Zugdeichsel am Rahmen angelenkt ist, fluchtet.

Desweiteren wirkt sich vorteilhaft aus, wenn der Vorratsbehälter trichterförmig ausgebildet ist und derart angeordnet ist, daß jeweils zu der Längsseite der Maschine ein trichterförmiger Bereich des Vorratsbehälters verläuft, in welchem beim engen Wenden das Schlepperantriebsrad bzw. die hinteren Teile des Schleppers in diesem Raum unter dem trichterförmigen zur Maschinenmitte hin verlaufende Vorratsbehälterbereich hineinragen können.

Weitere Einzelheiten der Erfindung sind der Beispielsbeschreibung und den Zeichnungen zu entnehmen. Hierbei zeigen
- Fig. 1: die landwirtschaftliche Verteilmaschine in der Draufsicht und

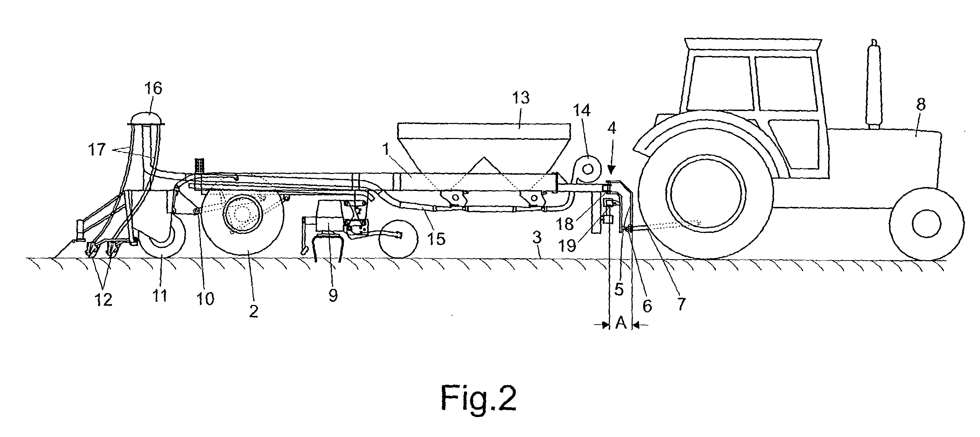

- Fig. 2: die Verteilmaschine in der Seitenansicht.

Die gezogene landwirtschaftliche Verteilmaschine ist als Bestellkombination ausgebildet. Diese Maschine weist den Tragrahmen 1 auf, der sich im hinteren Bereich auf den Laufrädern 2 während der Transportfahrt auf dem Boden 3 abstützt. An der Vorderseite des Tragrahmens 1 ist mittels des Schwenkgelenkes 4 das Zugdeichselelement 5 angeordnet. Das Zugdeichselelement 5 wird über Kupplungselemente 6 an die Unterlenker 7 des Dreipunktkrafthebers des Ackerschleppers 8 angekuppelt. An dem Tragrahmen 1 ist das Bodenbearbeitungsgerät 9 angeordnet. Auf der Rückseite des Tragrahmens 1 ist mittels der Kupplungselemente 10 das Walzenelement 11 und hinter dem Walzenelement 11 sind die Säschare 12 angeordnet. Im vorderen Bereich des Tragrahmens 1 ist der Vorratsbehälter 13 angeordnet. Von dem Vorratsbehälter 13 aus gelangt das Material über Dosierelemente in eine an das Gebläse 14 angeschlossene Förderleitung 15. Von den Förderleitungen 15 aus wird das Material zu dem Verteilerkopf 16 gefördert. Von dem Verteilerkopf 16 wird das Material auf die einzelnen zu den Säscharen 12 führenden Verteilerleitungen 17 aufgeteilt.

Das Zugdeichselelement 5 ist mit dem Gelenk 4, welches eine aufrechte Schwenkachse 18 aufweist, an dem Tragrahmen 1 auf dessen Vorderseite befestigt. Der Abstand A zwischen der Schwenkachse 18 des Gelenkes 4 und den Kuppelelementen 6 der Zugdeichsel 5 entspricht zumindest etwa der halben Breite b des Vorratsbehälters 13. Unterhalb der Zugdeichsel 5 und des Tragrahmens 1 ist ein Schwenkgetriebe 19 angeordnet. Die Achsen der aufrechten Wellen des Schwenkgetriebes 19 fluchten mit der Schwenkachse 18 des Gelenkes 4, mit dem die Zugdeichsel 5 am Tragrahmen 1 angelenkt ist. An der Eingangswelle des Schwenkgetriebes 19 ist eine nicht dargestellte Gelenkwelle, die mit der Zapfwelle des Schleppers gekuppelt ist, angeordnet. An der Abgangswelle des Schwenkgetriebes 19 ist eine nicht dargestellte Übertragungseinrichtung angeordnet, über welche die Bodenbearbeitungsmaschine 9 angetrieben wird.

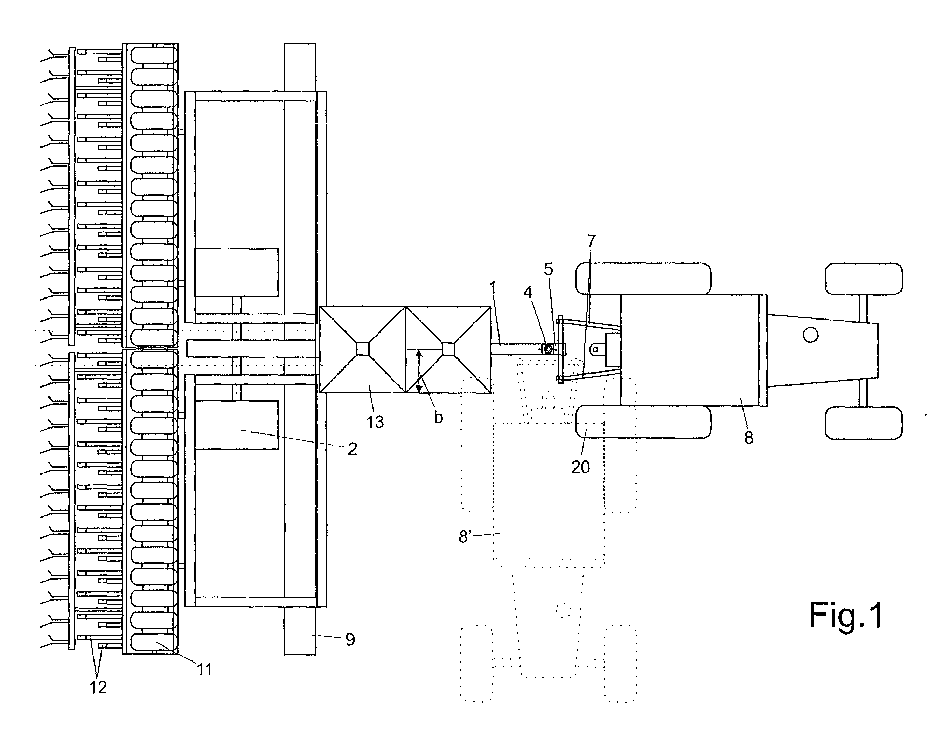

Aufgrund der schwenkbaren Anordnung des Zugdeichselelementes 5 über das Gelenk 4 an dem Tragrahmen 1 sind sehr enge Wenderadien möglich, wie in Fig. 1 durch die mit strichpunktierten Linien eingezeichnete Position des Ackerschleppers 8' verdeutlicht ist. Dadurch, daß der Vorratsbehälter 13 trichterförmig ausgebildet ist, können in dem Raum unterhalb des trichterförmigen Bereiches des Vorratsbehälters 1 die Ackerschlepperräder 20 oder Teile des Ackerschleppers 8 beim Wenden hineinragen. Hierdurch wird der enge Wenderadius auch mit einem relativ kurzen Zugdeichselelement 5 möglich.

## Patentansprüche

1. Gezogene landwirtschaftliche Verteilmaschine mit einem Tragrahmen (1) der sich auf seiner Rückseite über Laufräder (2) auf dem Boden abstützt und auf seiner Vorderseite ein Kuppelelemente (6) aufweisendes Deichselelement (5) zum Ankuppeln an die Unterlenker des Krafthebers eines Ackerschleppers aufweist, **dadurch gekennzeichnet, daß** in der vorderen Hälfte des Tragrahmens (1) ein Vorratsbehälter (13) angeordnet ist, daß das Zugdeichselelement (5) mit einem Gelenk (4), welches eine aufrechte Schwenkachse (18) aufweist, an dem Tragrahmen (1) befestigt ist, **daß** der Abstand (A) zwischen der Schwenkachse (18) des Gelenkes (4) und den Kuppelelementen (6) der Zugdeichsel (5) zumindest etwa der halben Breite (b) des Vorratsbehälters (13) entspricht.

2. Verteilmaschine nach Anspruch 1, **dadurch gekennzeichnet, daß** unterhalb der Zugdeichsel (5) und des Tragrahmens (1) ein Schwenkgetriebe (19) angeordnet ist, **daß** die Achse der aufrechten Wellen des Schwenkgetriebes (19) mit der Schwenkachse (18) des Gelenkes (4), mit dem die Zugdeichsel (5) am Tragrahmen (1) angelenkt ist, fluchtet.

## Claims

1. Towed agricultural distributor including a supporting frame (1), which is supported on the ground at its rear via running wheels (2) and has at its front a shaft member (5), which has a coupling member (6), for coupling to the lower guide rod of the hydraulic lift of a tractor, **characterised in that** a hopper (13) is disposed in the front half of the supporting frame (1), **in that** the towing shaft member (5) is secured to the supporting frame (1) with a pivot joint (4), which has an upwardly extending pivotal axis (18), and **in that** the distance (A) between the pivotal axis (18) of the pivot joint (4) and the coupling members (6) of the towing shaft (5) corresponds at least approximately to half the width (b) of the hopper (13).

2. Distributor according to claim 1, **characterised in that** a turning gear (19) is disposed beneath the towing shaft (5) and the supporting frame (1), and **in that** the axis of the upright shafts of the turning gear (19) is in alignment with the pivotal axis (18) of the pivot joints (4), with which the towing shaft (5) is pivotally secured to the supporting frame (1).

## Revendications

1. Epandeur agricole tracté comportant un châssis (1) qui s'appuie sur le sol du côté arrière par des roues de roulement (2) et qui comporte du côté avant, un élément de timon (5) muni d'un élément de couplage (6) pour être relié aux bras inférieurs du dispositif de levage d'un tracteur agricole,
**caractérisé en ce que**
un réservoir (13) est prévu dans la moitié avant du châssis (1),
l'élément de timon de traction (5) comporte une articulation (4) ayant un axe de pivotement vertical (18), pour être fixé au châssis (1) de façon que la distance (A) entre l'axe de pivotement (18) de l'articulation (4) et les éléments de couplage (6) du timon de traction (5) correspondent au moins sensiblement à la demie largeur (b) du réservoir (13).

2. Epandeur selon la revendication 1,
**caractérisé par**
une transmission pivotante (19) installée sous le timon de traction (5) et le châssis de support (1), l'axe des arbres montants de la transmission pivotante (19) est aligné avec l'axe de pivotement (18) de l'articulation (4) par laquelle le timon de traction (5) est articulé au châssis (1).
